# EUROPÄISCHE PATENTSCHRIFT

(11) **EP 4 015 274 B1**
(45) Veröffentlichungstag und Bekanntmachung des Hinweises auf die Patenterteilung: **13.08.2025**
(21) Anmeldenummer: 21212417.6
(22) Anmeldetag: 06.12.2021
(51) Int. Cl.: B60K 11/08

(54) **LUFTFÜHRUNGSVORRICHTUNG FÜR EIN KRAFTFAHRZEUG, AUSSENHAUTBAUTEIL FÜR EIN KRAFTFAHRZEUG SOWIE VERFAHREN ZUM HERSTELLEN EINES SOLCHEN AUSSENHAUTBAUTEILS**
AIR GUIDING DEVICE FOR A MOTOR VEHICLE, OUTER SHELL COMPONENT FOR A MOTOR VEHICLE AND METHOD FOR MANUFACTURING SUCH AN OUTER SHELL COMPONENT
DISPOSITIF DE GUIDAGE D'AIR POUR UN VÉHICULE AUTOMOBILE, COMPOSANT D'ENVELOPPE EXTÉRIEURE POUR UN VÉHICULE AUTOMOBILE, AINSI QUE PROCÉDÉ DE FABRICATION D'UN TEL COMPOSANT D'ENVELOPPE EXTÉRIEURE

(30) Priorität: 14.12.2020 DE 102020133301
(43) Veröffentlichungstag der Anmeldung: 22.06.2022
(73) Patentinhaber: REHAU Automotive SE & Co. KG, 95111 Rehau (DE); Skoda Auto a.s., 29301 Mladá Boleslav (CZ)
(72) Erfinder: Böhm, Florian, 95183 Trogen (DE); Kryspín, Radek, 14900 Prag 4 (CZ); Macanovic, Danijel, 95028 Hof (DE); Peller, David, 95163 Weißenstadt (DE); Svárovský, Milan, 29114 Dobrovice (CZ)

(56) Entgegenhaltungen:
- EP-A1- 2 356 003
- EP-A2- 1 544 021
- FR-A1- 2 783 766
- FR-A1- 2 934 837

## Beschreibung

Die vorliegende Erfindung betrifft eine Luftführungsvorrichtung für ein Kraftfahrzeug, ein Außenhautbauteil für ein Kraftfahrzeug sowie ein Verfahren zum Herstellen eines solchen Außenhautbauteils.

Auf dem Gebiet des Fahrzeugbaus, insbesondere Serienfahrzeugbaus, besteht aus vielerlei Gründen der Bedarf, Elemente des Kraftfahrzeugs mittels einer Luftführungsvorrichtung mit einem Luftmassenstrom zu beströmen. Aufgrund einer Eigenbewegung, zum Beispiel Fahrbewegung, des Kraftfahrzeugs wird beispielsweise ein Wärmetauscherelement des Kraftfahrzeugs mit einem Luftmassenstrom beströmt. Das jeweilige Wärmetauscherelement ist insbesondere Teil eines Kältemittelkreislaufs, etwa für eine Fahrzeuginnenraumklimatisierung, zur Kühlung eines Antriebsaggregats des Kraftfahrzeugs etc. Mit der derzeit immer weiter fortschreitenden Elektrifizierung von Kraftfahrzeugen, insbesondere Personenkraftwagen, steigt heutzutage des Weiteren der Bedarf, elektrische Elemente des elektrisch antreibbaren bzw. fortbewegbaren Kraftfahrzeugs, beispielsweise Traktionsakkumulatoren, elektrische Maschinen etc., zu kühlen. Hierzu kommen zum Beispiel (weitere) Wärmetauscherelemente und/oder Kältemittelkreisläufe zum Einsatz, deren Abwärme zum Beispiel mittels des durch die Fahrzeugeigenbewegung verursachten Luftmassenstroms abtransportiert wird. Alternativ oder zusätzlich ist es denkbar, dass Abwärme der elektrischen Elemente des elektrisch antreibbaren Kraftfahrzeugs, etwa des Traktionsakkumulators, der elektrischen Maschine bzw. elektrischen Maschinen, elektronischer Steuereinheiten etc., direkt mittels des die Elemente anströmenden bzw. umströmenden Luftmassenstroms abtransportiert wird. Des Weiteren weisen moderne Kraftfahrzeuge heutzutage wenigstens eine Reibbremsanlage auf, deren Leistungsfähigkeit und/oder Wirkungsgrad im direkten Zusammenhang mit einer aktuellen Temperatur der Reibbremselemente zusammenhängt. Insoweit besteht für die Reibbremsanlage ebenfalls der Bedarf, diese derart zu temperieren, insbesondere zu kühlen, dass das Kraftfahrzeug zuverlässig und sicher mittels der Reibbremsanlage abbremsbar ist und bleibt.

Derartige Luftführungsvorrichtungen können zusätzlich oder alternativ einen aerodynamischen Zweck erfüllen und den Strömungswiderstandskoeffizient (c_{w}-Wert) des Kraftfahrzeugs mindern.

Um also den Luftmassenstrom besonders effizient zu den zu kühlenden Elementen des Kraftfahrzeugs zu leiten, sind Luftleiteinrichtungen bzw. Luftlenkeinrichtungen bekannt. Bei einer Fahrzeugeigenbewegung strömt die das Kraftfahrzeug anströmende Luft in die Luftleit- bzw. Luftlenkeinrichtung ein und wird mittels dieser (das heißt aufgrund deren Gestalt) in Richtung hin zu dem zu kühlenden Element des Kraftfahrzeugs gelenkt bzw. geleitet. Auf diese Weise gelangt besonders viel Luftmasse zu dem zu kühlenden Element des Kraftfahrzeugs, sodass das entsprechende Element besonders effizient gekühlt wird. Derartige Luftleit- bzw. Luftlenkeinrichtungen sind beispielsweise aus der DE 10 2014 018 990 A1, aus der DE 10 2013 110 204 A1 sowie WO 2020/002501 A1 bekannt.

Gattungsgemäße Außenhautbauteile sind den Dokumenten FR 2 934 837 A1, EP 1 544 021 A2 und FR 2 783 766 A1 entnehmbar.

Um einen besonders festen Sitz einer solchen Luftleiteinrichtung bzw. Luftlenkeinrichtung an/in dem entsprechenden Kraftfahrzeug zu gewährleisten, wird die entsprechende Luftleit- bzw. Luftlenkeinrichtung, insbesondere innenseitig, an einer Außenhaut des entsprechenden Kraftfahrzeugs befestigt, insbesondere verschweißt, verklebt und/oder anderweitig stoffschlüssig damit verbunden. Obwohl die entsprechende Luftleit- bzw. Luftlenkeinrichtung also innenseitig der Außenhaut des Kraftfahrzeugs angebracht und daran fixiert ist, kommt es auf einer der Innenseite entgegengesetzten Sichtseite der Außenhaut des Kraftfahrzeugs durch die stoffschlüssige Befestigung der Luftlenkeinrichtung bzw. Luftleitrichtung zu Oberflächenabzeichnungen bzw. unerwünschten Markierungen des stoffschlüssigen Verbunds zwischen dem Außenhautbauteil und der Luftleiteinrichtung/Luftlenkeinrichtung. Hierdurch ist eine Akzeptanz des entsprechend gebauten Kraftfahrzeugs besonders gering, da eine Käuferschaft des entsprechenden Kraftfahrzeugs besonders hohe Ansprüche an eine Oberflächenqualität des Kraftfahrzeugs stellt. Darüber hinaus ist das Material der Außenhaut das Kraftfahrzeugs an der Stelle, an welcher die herkömmliche Luftleiteinrichtung innenseitig an dem Außenhautbauteil stoffschlüssig befestigt ist, zu einer besonders hohen mechanischen, thermischen und/oder chemischen Belastung des Materials des Außenhautbauteils, sodass diese Stelle als ein Keim für unerwünschte Korrosion dienen kann. Das beßenhautbauteil zum einen eine Oberflächenqualität des Außenhautbauteils sinkt, und zum anderen bereits durch das stoffschlüssige Befestigen der Luftleiteinrichtung an dem Außenhautbauteil eine Materialschwächung an dem Außenhautbauteil auftreten kann.

Aufgabe der vorliegenden Erfindung ist es, eine besonders vorteilhafte Möglichkeit zu schaffen, eine Lüftungsvorrichtung sicher an einem Außenhautelement eines Kraftfahrzeugs zu befestigen, wobei eine Qualität des Außenhautelements unbeeinträchtigt bleibt.

Diese Aufgabe wird durch ein Außenhautbauteil für ein Kraftfahrzeug mit einem Außenhautelement und einer Luftführungsvorrichtung gemäß Anspruch 1 gelöst.

Werden im Zusammenhang mit einem Verfahren zum Herstellen des Außenhautbauteils Merkmale, Vorteile und vorteilhafte Ausgestaltungen der Luftführungsvorrichtung und/oder des Außenhautbauteils beschrieben, sind diese als ebensolche anzusehen.

Erfindungsgemäß ist eine Luftführungsvorrichtung für ein Kraftfahrzeug vorgesehen. Bei dem Kraftfahrzeug handelt es sich insbesondere um einen Kraftwagen, etwa einen Personenkraftwagen und/oder Lastkraftwagen. Die Luftführungsvorrichtung weist zwei Luftführungselemente auf, beispielsweise ein erstes Luftführungselement und ein zweites Luftführungselement. Die beiden Luftführungselemente sind insbesondere einstückig miteinander ausgebildet. In diesem Fall ist die Luftführungsvorrichtung einstückig ausgebildet, indem die Luftführungselemente einstückig miteinander ausgebildet wurden. Ferner ist es denkbar, dass die Luftführungselemente miteinander stoffschlüssig verbunden sind.

Insbesondere wenn die Luftführungsvorrichtung aus zwei separat voneinander hergestellten Luftführungselementen hergestellt ist, weist die Luftführungsvorrichtung eine Verbindungseinrichtung auf, die an dem ersten der Luftführungselemente ein erstes Verbindungselement und an dem zweiten der Luftführungselemente ein zweites Verbindungselement umfasst. Die beiden Verbindungselemente, das heißt das erste Verbindungselement und das zweite Verbindungselement, korrespondieren miteinander, sodass mittels der Verbindungselemente die Luftführungselemente aneinander fixiert sind. Wird das jeweilige Luftführungselement allein betrachtet, sind die beiden Verbindungselemente also derart ausgebildet, dass die beiden Luftführungselemente mittels der Verbindungseinrichtung, das heißt mittels der beiden Verbindungselemente aneinander fixierbar sind. Dabei ist es zwar denkbar, dass die Verbindungseinrichtung bzw. die beiden Verbindungselemente zum Erzeugen eines Stoffschlusses zwischen den beiden Luftführungselementen ausgebildet ist bzw. sind. Ferner kann die Verbindungseinrichtung derart ausgebildet sein, dass die beiden Luftführungselemente unter Ausbleiben einer stoffschlüssigen Verbindung zwischeneinander aneinander fixiert sind.

Indem das erste Luftführungselement und das zweite Luftführungselement aneinander fixiert sind oder einstückig miteinander ausgebildet sind, ist zwischen den Luftführungselementen ein von Luft durchströmbarer Luftführungskanal gebildet.

Das jeweilige Verbindungselement und das jeweilige Luftführungselement sind miteinander stoffschlüssig verbunden, insbesondere einstückig miteinander ausgebildet. Ferner ist es denkbar, dass das jeweilige Verbindungselement und das jeweilige Luftführungselement zunächst voneinander separat hergestellt wurden und anschließend kraft-, form- und/oder stoffschlüssig miteinander verbunden wurden.

Bei dem ersten Luftführungselement handelt es sich insbesondere um ein äußeres der beiden Luftführungselemente, wobei es sich bei dem zweiten Luftführungselement um ein inneres der beiden Luftführungselemente handelt. Das in Bezug zu einer senkrechten Längsmittenebene (X-Z-Ebene) des Kraftfahrzeugs erste bzw. äußere Luftführungselement ist weiter von einer senkrechten Längsmittenebene bzw. X-Z-Ebene des Kraftfahrzeugs entfernt als das zweite bzw. innere Luftführungselement. Mit anderen Worten ist das zweite, innere Luftführungselemente zwischen dem ersten, äußeren Luftführungselement und der senkrechten Längsmittenebene des Kraftfahrzeugs angeordnet.

Das jeweilige Luftführungselement ist beispielsweise aus einem metallischen Material und/oder aus einem Kunststoff aufweisenden Material ausgebildet. Insbesondere ist das jeweilige Luftführungselement zumindest teilweise reversibel biegbar bzw. flexibel ausgebildet, um das jeweilige Luftführungselement besonders einfach und/oder aufwandsarm an eine Kontur des Kraftfahrzeugs, insbesondere an einem Einbauort der Luftführungsvorrichtung, anzuschmiegen. Des Weiteren ist es denkbar, dass das eine Luftführungselement aus einem Material ausgebildet ist bzw. ein anderes Material umfasst als das andere der beiden Luftführungselemente. So ist es beispielsweise denkbar, dass das eine der Luftführungselemente aus einem metallischen Material gebildet ist, wohingegen das andere der Luftführungselemente einen Kunststoff umfasst bzw. aus Kunststoff gebildet ist.

Die Luftführungsvorrichtung weist des Weiteren ein Befestigungselement auf, das an dem ersten Luftführungselement angeordnet ist. Das bedeutet, dass das erste Luftführungselement das Befestigungselement der Luftführungsvorrichtung aufweist. Hierzu ist insbesondere vorgesehen, dass das Befestigungselement und das erste Luftführungselement der Luftführungsvorrichtung einstückig miteinander ausgebildet sind. Des Weiteren ist es denkbar, dass das erste Luftführungselement und das Befestigungselement der Luftführungsvorrichtung kraft-, form- und/oder stoffschlüssig miteinander verbunden sind. Das an dem ersten Luftführungselement der Luftführungsvorrichtung angeordnete Befestigungselement und ein erstes Befestigungselement des Kraftfahrzeugs, insbesondere eines Außenhautelements des Kraftfahrzeugs, korrespondieren miteinander. Hierdurch ist mittels des Befestigungselements der Luftvorrichtung das erste Luftführungselement unter Ausbleiben eines Stoffschlusses an dem Außenhautelement des Kraftfahrzeugs fixierbar - das heißt ohne ein Schweißen, Kleben, Löten etc. Folglich sind mittels des Befestigungselements der Luftführungsvorrichtung das Außenhautelement und die Luftführungsvorrichtung aneinander fixierbar, wobei zwischen dem Außenhautelement und der Luftführungsvorrichtung ein Stoffschluss ausbleibt.

Der Luftführungskanal der Luftführungsvorrichtung ist entlang einer Durchströmungsrichtung von einer ersten Kanalöffnung und einer zweiten Kanalöffnung begrenzt. Mit anderen Worten sind die beiden Kanalöffnungen der Luftführungsvorrichtung durch den Luftführungskanal fluidisch miteinander verbunden. Strömt also im Betrieb der Luftführungsvorrichtung, etwa in einem Fahrbetrieb des Kraftfahrzeugs, Luft durch eine der beiden Kanalöffnungen in den Luftführungskanal ein, strömt diese Luft danach aus der anderen der beiden Kanalöffnungen des Luftführungskanals bzw. der Luftführungsvorrichtung aus. In diesem Zusammenhang ist für die Luftführungsvorrichtung, insbesondere für das Befestigungselement, das an dem ersten Luftführungselement angeordnet ist, vorgesehen, dass eine der beiden Kanalöffnungen, das heißt der Luftführungskanal, mit einer Luftdurchströmungsöffnung des Außenhautelements korrespondiert. Mit anderen Worten ist das Befestigungselement der Luftführungsvorrichtung derart an dem ersten Luftführungselement angeordnet, dass in Einbaulage der Luftführungsvorrichtung eine der Kanalöffnungen des Luftführungskanals und die Luftdurchströmungsöffnung des Außenhautelements direkt aneinander anschließen. Das bedeutet, dass Luft, die durch die Luftdurchströmungsöffnung des Außenhautelements strömt, direkt durch die entsprechende Kanalöffnung in den Luftführungskanal der Luftführungsvorrichtung einströmt.

Indem das an dem ersten Luftführungselement angeordnete Befestigungselement dazu ausgebildet ist, kraft- und/oder formschlüssig, aber nicht stoffschlüssig, an dem Außenhautelement des Kraftfahrzeugs befestigt zu werden, ist die Luftführungsvorrichtung insgesamt an dem Außenhautelement fixierbar, wobei zwischen dem Außenhautelement und den ersten Befestigungselementen ein Stoffschluss ausbleibt. Dies ist insoweit vorteilhaft, als zum Fixieren der Luftführungsvorrichtung an dem Außenhautelement eine besonders hohe thermische, chemische und/oder mechanische Belastung eines Materials des Außenhautelements unterbleibt. Insbesondere wird eine Oberflächenabzeichnung an einer Sichtseite des Außenhautelements vermieden, welche bei einem stoffschlüssigen Verbinden einer herkömmlichen Luftführungsvorrichtung auftreten würde. Infolge dessen verbleibt eine Qualität des Außenhautelements, an welchem die Luftführungsvorrichtung zu befestigt ist, unbeeinträchtigt.

In weiterer Ausgestaltung der Luftführungsvorrichtung ist an dem zweiten Luftführungselement ein weiteres Befestigungselement angeordnet, welches mit einem weiteren Befestigungselement des Außenhautelements korrespondiert. Hierdurch ist mittels des weiteren Befestigungselements das zweite Luftführungselement unter Ausbleiben eines Stoffschlusses an dem Außenhautelement des Kraftfahrzeugs fixierbar. Das bedeutet, dass, wenn die Luftführungsvorrichtung an dem Außenhautelement des Kraftfahrzeugs fixiert ist, die Luftführungsvorrichtung mittels des (ersten) Befestigungselements der Luftführungsvorrichtung und mittels des weiteren (zweiten) Befestigungselements der Luftführungsvorrichtung an dem Außenhautelement des Kraftfahrzeugs gehalten ist. Wie bereits im Zusammenhang mit dem ersten Befestigungselement der Luftführungsvorrichtung beschrieben, ist das weitere bzw. zweite Befestigungselement der Luftführungsvorrichtung dazu ausgebildet, zwischen dem zweiten Luftführungselement und dem Außenhautelement, insbesondere einem weiteren (zweiten) Befestigungselement des Außenhautelements, einen Kraftschluss und/oder Formschluss - nicht aber einen Stoffschluss - einzugehen. Auf diese Weise ist die Luftführungsvorrichtung besonders sicher und positionsstabil an dem Außenhautelement des Kraftfahrzeugs, insbesondere an der Luftdurchströmungsöffnung des Außenhautelements, fixierbar.

Einer weiteren vorteilhaften Ausführungsform der Luftführungsvorrichtung zufolge umfasst das an dem ersten Luftführungselement angeordnete (erste) Befestigungselement der Luftführungsvorrichtung ein Rastelement, welches mit einer Rastelementaufnahme des (ersten) Befestigungselements des Kraftfahrzeugs bzw. Außenhautelements korrespondiert. Beispielsweise ist das Rastelement des an dem ersten Luftführungselement angeordneten Befestigungselements als ein Rastkeil ausgebildet, um mit dem an dem Außenhautelement angeordneten (ersten) Befestigungselement einen Formschluss einzugehen, welcher insbesondere als ein reversibel und zerstörungsfrei lösbarer Formschluss ausgebildet ist. Hierdurch ist die Luftführungsvorrichtung besonders einfach und/oder aufwandsarm mit dem Außenhautelement des Kraftfahrzeugs verbindbar sowie besonders einfach und/oder aufwandsarm von dem Außenhautelement zerstörungsfrei lösbar. Sollte die Luftführungsvorrichtung beispielsweise beschädigt sein, ist es so ermöglicht, die Luftführungsvorrichtung besonders effizient von dem Außenhautelement des Kraftfahrzeugs zu lösen, wobei auf ein spanendes und/oder thermisches Materialtrennen zwischen dem Außenhautelement und der Luftführungsvorrichtung in vorteilhafter Weise verzichtet werden kann. Folglich ist die Luftführungsvorrichtung, insbesondere das erste Luftführungselement und/oder das zweite Luftführungselement, besonders einfach reparierbar bzw. wartbar.

Um einen besonders festen bzw. sicheren Sitz der Luftführungsvorrichtung in Bezug zu dem Kraftfahrzeug, insbesondere in Bezug zu den Raumrichtungen, zu gewährleisten, weist die Luftführungsvorrichtung erfindungsmäßig an dem ersten Luftführungselement eine Randlasche auf. Mit anderen Worten ist an dem ersten Luftführungselement der Luftführungsvorrichtung die Randlasche ausgebildet. Ferner weist das an dem ersten Luftführungselement angeordnete (erste) Befestigungselement die Randlasche als ein Halteelement auf. Hierbei ist die Randlasche dazu konfiguriert, in eine korrespondierende Halteelementaufnahme, etwa eine Haltenut, des Kraftfahrzeugs, insbesondere des Außenhautelements, formschlüssig einzugreifen.

Alternativ hierzu ist es denkbar, dass an dem ersten Luftführungselement eine Halteelementaufnahme ausgebildet ist, wobei dann an dem Kraftfahrzeug bzw. an dem Außenhautelement ein entsprechend mit der Halteelementaufnahme korrespondierendes Halteelement ausgebildet ist. Unabhängig davon, ob das Halteelement bzw. die Halteelementaufnahme an dem ersten Luftführungselement oder an dem Außenhautelement ausgebildet ist, ist des Weiteren vorgesehen, dass das Halteelement und die Halteelementaufnahme dazu ausgebildet sind, während eines Montierens bzw. Befestigens der Lüftungsvorrichtung an dem Außenhautelement entlang einer Montagerichtung aneinander abzugleiten. Besonders bevorzugt ist es, wenn die Montagerichtung in Bezug zu dem Kraftfahrzeug zumindest im Wesentlichen parallel zu einer Hochachse (Z-Achse) des Kraftfahrzeugs verläuft oder mit dieser zusammenfällt. Insoweit dienen das Halteelement und die Halteelementaufnahme als eine Montagehilfseinrichtung, indem zum Montieren der Lüftungsvorrichtung an dem Außenhautelement die Lüftungsvorrichtung in Bezug zur Montagerichtung translatorisch verschiebbar gehalten ist, wohingegen die Lüftungsvorrichtung aufgrund des Halteelements bzw. aufgrund der Halteelementaufnahme quer zur Montagerichtung, insbesondere quer zur Z-Achse des Kraftfahrzeugs, gegen ein Ausweichen von der Montagerichtung gesperrt ist. Hierdurch ergibt sich eine besonders einfache bzw. aufwandsarme Montierbarkeit der Luftführungsvorrichtung.

Wie bereits weiter oben dargelegt, ist es denkbar, dass die beiden Luftführungselemente kraft- und/oder formschlüssig - aber nicht stoffschlüssig - miteinander verbindbar bzw. verbunden sind. Hierzu weist die Verbindungseinrichtung - gemäß einer weiteren vorteilhaften Ausgestaltung der Luftführungsvorrichtung - an den Luftführungselementen ein jeweiliges Formschlusselement auf, was bedeutet, dass die Verbindungseinrichtung der Luftführungsvorrichtung eine Formschlusseinrichtung aufweist. Alternativ oder zusätzlich weist die Verbindungseinrichtung an den Luftführungselementen ein jeweiliges Kraftschlusselement auf, sodass infolgedessen die Verbindungseinrichtung eine Kraftschlusseinrichtung aufweist. In diesem Zusammenhang ist es insbesondere vorgesehen, dass die Luftführungsvorrichtung frei von einem Stoffschlusselement, das heißt frei von einer Stoffschlusseinrichtung, ist. Hierbei ist es besonders bevorzugt, wenn die Formschlusseinrichtung bzw. Kraftschlusseinrichtung, mittels derer die beiden Luftführungselemente zu der Luftführungsvorrichtung miteinander verbunden sind, reversibel zerstörungsfrei lösbar ausgebildet ist. So lässt sich die Luftführungsvorrichtung noch einfacher bzw. aufwandsärmer reparieren und/oder warten. Denn ist beispielsweise lediglich das zweite bzw. innere Luftführungselement defekt/beschädigt, kann für ein Austauschen bzw. Ersetzen des zweiten Luftführungselements die reversibel zerstörungsfrei lösbare Formschlusseinrichtung/Kraftschlusseinrichtung gelöst werden, und das zweite bzw. innere Luftführungselement ausgetauscht werden, während das erste bzw. äußere Luftführungselement in Einbauposition verbaut bleibt.

Die Erfindung betrifft des Weiteren ein Außenhautbauteil für ein Kraftfahrzeug mit einem Außenhautelement und einer gemäß der vorstehenden Beschreibung ausgebildeten Luftführungsvorrichtung sowie mit einer Befestigungseinrichtung, wobei das Außenhautelement und die Luftführungsvorrichtung aneinander fixiert sind, indem ein erstes Luftführungselement der Luftführungsvorrichtung und das Außenhautelement mittels der Befestigungseinrichtung und Ausbleiben eines Stoffschlusses aneinander fixiert sind. Indem also die Luftführungsvorrichtung kraft- und/oder formschlüssig - aber nicht stoffschlüssig - an dem Außenhautelement des Außenhautbauteils fixiert ist, ist eine Oberflächenabzeichnung oder eine sonstige an der Außenseite des Außenhautelements sichtbare Markierung vermieden, welche beispielsweise auftreten würde, wenn eine herkömmliche Luftführungsvorrichtung stoffschlüssig an dem Außenhautelement befestigt worden wäre. Mit anderen Worten bleibt eine Qualität des Außenhautelements und infolgedessen eine Qualität des Außenhautbauteils unbeeinträchtigt, indem die Luftführungsvorrichtung unter Ausbleiben des Stoffschlusses an dem Außenhautelement befestigt ist.

Insbesondere weist das Außenhautbauteil eine Luftdurchströmungsöffnung auf, die an dem Außenhautelement ausgebildet ist. Dabei ist die Luftführungsvorrichtung derart an dem Außenhautelement angeordnet bzw. fixiert, dass ein durch zwei Luftführungselemente der Luftführungsvorrichtung gebildeter Luftführungskanal und die Luftdurchströmungsöffnung direkt aneinander anschließen. Demnach strömt Luft, indem diese durch die Luftdurchströmungsöffnung strömt, durch den Luftführungskanal bzw. durch die Luftführungsvorrichtung hindurch.

Das mit der Luftführungsvorrichtung ausgerüstete Außenhautbauteil kann als ein Aerodynamikelement des Kraftfahrzeugs betrachtet werden, etwa als eine Luftzuführhilfe für Elemente des Kraftfahrzeugs und/oder als Luftabführhilfe für Elemente des Kraftfahrzeugs. So ist es beispielsweise denkbar, dass mittels des Aerodynamikelements, das heißt mittels des Außenhautbauteils, eine Kühlluft für das Kraftfahrzeug, insbesondere für eine Reibbremsanlage, für eine Verbrennungskraftmaschine, für eine elektrische Maschine, für einen elektrischen Akkumulator (zum Beispiel Traktionsakkumulator), für ein Wäremtauscherelement (etwa für eine Innenraumklimatisierung), und/oder eine Ladeluft für die Verbrennungskraftmaschine, zu den entsprechenden Elementen des Kraftfahrzeugs gelenkt oder geleitet wird. Insoweit werden die entsprechenden zu kühlenden, das heißt mit Luft zu beströmenden Elemente des Kraftfahrzeugs besonders effizient mit Luft beströmt, die beispielsweise durch einen Fahrbetrieb des Kraftfahrzeugs und/oder mittels einer Lüftereinrichtung und durch den Luftführungskanal der Luftführungsvorrichtung hindurch bereitgestellt wird.

In weiterer Ausgestaltung des Außenhautbauteils umfasst die Befestigungseinrichtung eine an dem Außenhautelement angeordnete Rastelementaufnahme sowie ein damit korrespondierendes und an dem ersten Luftführungselement der Luftführungsvorrichtung angeordnetes Rastelement. Hierdurch sind das Außenhautelement und das erste Luftführungselement mittels der Befestigungseinrichtung formschlüssig aneinander fixiert. Das bedeutet, dass die Befestigungseinrichtung eine Rastverbindungseinrichtung umfasst, welche durch die an dem Außenhautelement angeordnete Rastelementaufnahme und durch das an dem ersten Luftführungselement angeordnete Rastelement gebildet bzw. bildbar ist. Diese Rastverbindungseinrichtung ist insbesondere reversibel zerstörungsfrei lösbar ausgebildet, sodass es besonders einfach und/oder aufwandsarm ermöglicht ist, die Luftführungsvorrichtung von dem Außenhautelement abzukoppeln, indem die Rastverbindungseinrichtung bestimmungsgemäß zerstörungsfrei gelöst wird. Auf diese Weise ist es besonders einfach und/oder aufwandsarm ermöglicht, die Luftführungsvorrichtung von dem Außenhautelement zu demontieren.

Gemäß einer weiteren vorteilhaften Ausgestaltung des Außenhautbauteils zufolge umfasst die Befestigungseinrichtung ein weiteres (zweites) Befestigungselement sowie ein damit korrespondierendes und an dem zweiten Luftführungselement angeordnetes, weiteres (zweites) Befestigungselement. Hierdurch sind das Außenhautelement und das zweite Luftführungselement mittels der Befestigungseinrichtung formschlüssig aneinander fixiert bzw. fixierbar. Es ergibt sich somit, dass die Luftführungsvorrichtung besonders sicher und positionsstabil an dem Außenhautelement befestigt ist.

Insbesondere handelt es sich bei dem Außenhautelement des Außenhautbauteils um ein Verkleidungselement des Kraftfahrzeugs. Vorzugsweise ist das Außenhautelement des Kraftfahrzeugs als ein Verkleidungselement für eine vordere Stoßfangeinrichtung ("Stoßfänger", "Stoßstange") ausgebildet. Alternativ oder zusätzlich ist es denkbar, dass das die Luftführungsvorrichtung aufweisende Außenhautbauteil als ein Verkleidungselement abseits der vorderen Stoßfangeinrichtung und/oder angrenzend an die vordere Stoßfangeinrichtung ausgebildet ist, beispielsweise als ein Verkleidungselement für eine hintere Stoßfangeinrichtung, als ein Frontkotflügel, als ein Heckkotflügel, als ein Verkleidungselement für ein Klappenelement des Kraftfahrzeugs (Motorhaube, Tür etc.).

Zudem betrifft die Erfindung ein Verfahren zum Herstellen eines gemäß der vorstehenden Beschreibung ausgebildeten Außenhautbauteils für ein Kraftfahrzeug. Um das Außenhautbauteil herzustellen, wird eine zuvor beschriebene Lüftungsvorrichtung innenseitig an ein Außenhautelement des Außenhautbauteils angebracht. Demnach wird beim/zum Herstellen des Außenhautbauteils das Außenhautelement mit einem ersten Befestigungselement bereitgestellt. Mit anderen Worten weist das Außenhautelement das erste Befestigungselement auf. Des Weiteren wird zum Herstellen des Außenhautbauteils ein erstes Luftführungselement der Luftführungsvorrichtung bereitgestellt. Ferner können das erste Luftführungselement und ein zweites Luftführungselement einstückig miteinander bereitgestellt werden. Jedenfalls weist die Luftführungsvorrichtung ein erstes Befestigungselement auf, welches an dem ersten, äußeren Luftführungselement angeordnet ist. Hierbei korrespondieren das erste Befestigungselement des Außenhautelements und das erste Befestigungselement der Luftführungsvorrichtung bzw. des ersten Luftführungselements miteinander.

Weiter werden das Außenhautelement und das erste Luftführungselement aneinander befestigt, indem, unter Ausbleiben eines stoffschlüssigen Verbindens, die beiden ersten Befestigungselemente entlang einer vorgegebenen Montagerichtung miteinander in Zusammenwirkung gebracht werden. Hierbei ist insbesondere vorgesehen, dass das erste Luftführungselement entlang einer Z-Achse des Kraftfahrzeugs bzw. des Außenhautbauteils geführt wird, bis das erste Befestigungselement des ersten Luftführungselements und das erste Befestigungselement des Außenhautbauteils miteinander in Eingriff gebracht sind. Mit anderen Worten wird das erste Luftführungselement so lange und/oder so weit entlang der Z-Achse bzw. entlang der Montagerichtung geführt, bis die ersten Befestigungselemente des ersten Luftführungselements bzw. des Außenhautbauteils miteinander kraft- und/oder formschlüssig ineinander eingreifen, wodurch dann das erste Luftführungselement positionsstabil an dem Außenhautelement fixiert ist.

Insbesondere, wenn die Luftführungselemente zunächst separat voneinander bereitgestellt werden, ist zum Herstellen des Außenhautbauteils weiter vorgesehen, die beiden Luftführungselemente - zum Beispiel unter Ausbleiben eines stoffschlüssigen Verbindens oder stoffschlüssig - aneinander zu fixieren. Indem das erste und das zweite Luftführungselement einstückig miteinander ausgebildet oder mittels der Verbindungseinrichtung aneinander fixiert bzw. angebracht werden, wird zwischen den Luftführungselementen ein von Luft durchströmbarer Luftführungskanal ausgebildet.

Das Verfahren bietet eine besonders einfache und/oder aufwandsarme Möglichkeit, die Luftführungsvorrichtung an dem Außenhautelement zu befestigen und schließlich das Außenhautbauteil besonders einfach und/oder aufwandsarm herzustellen. Hierbei wird insbesondere auf ein stoffschlüssiges Verbinden zwischen der Luftführungsvorrichtung und dem Außenhautelement verzichtet, wodurch eine Qualität des Außenhautelements und infolgedessen eine Qualität des Außenhautbauteils in vorteilhafter Weise durch das Montieren der Luftführungsvorrichtung an dem Außenhautelement unbeeinträchtigt bleibt. Insbesondere ist bei dem Verfahren zum Herstellen des Außenhautbauteils vorgesehen, dass zunächst das erste Luftführungselement der Luftführungsvorrichtung entlang der Montagerichtung bzw. entlang der Z-Richtung kraft- und/oder formschlüssig mit dem Außenhautelement verbunden wird. Hiernach wird das zweite Luftführungselement der Luftführungsvorrichtung, beispielsweise quer zur Montagerichtung oder quer zur Z-Achse des Kraftfahrzeugs, an dem bereits an dem Außenhautelement fixierten ersten Luftführungselement mittels der Verbindungseinrichtung befestigt.

Die Zeichnung zeigt in
- Fig. 1: eine perspektivische Ansicht eines an einem Außenhautelement eines Kraftfahrzeugs befestigtes erstes Luftführungselement;
- Fig. 2: eine perspektivische Ansicht eines mit dem ersten Luftführungselement verbundenes zweites Luftführungselement, wodurch eine Luftführungsvorrichtung gebildet ist;
- Fig. 3: eine perspektivische und geschnittene Ansicht des ersten Luftführungselements, welches ein Rastelement aufweist;
- Fig. 4: eine perspektivische und geschnittene Ansicht der Luftführungsvorrichtung bzw. der Luftführungselemente, wobei ein Halteelement des ersten Luftführungselements in eine Haltenut des Außenhautelements eingreift; und
- Fig. 5: eine perspektivische Ansicht eines an der Luftführungsvorrichtung angeordneten Stützelements.

In den Figuren sind gleiche/funktionsgleiche Elemente mit gleichen Bezugszeichen versehen.

Im Folgenden werden eine Luftführungsvorrichtung 1 für ein Kraftfahrzeug 2, ein Außenhautbauteil 3 für das Kraftfahrzeug 2 sowie ein Verfahren zum Herstellen des Außenhautbauteils 3 gemeinsam beschrieben.

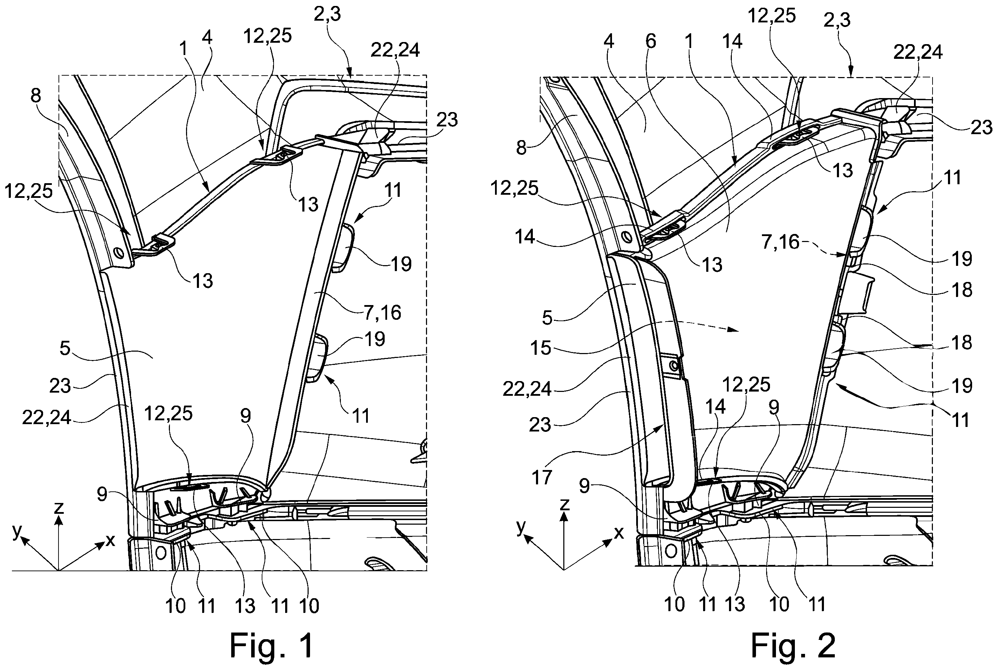

Fig. 1 zeigt in perspektivischer Ansicht einen an einem Außenhautelement 4 des Kraftfahrzeugs 2 (lediglich teilweise dargestellt) befestigtes Luftführungselement 5, welches im Weiteren als ein erstes bzw. äußeres Luftführungselement 5 bezeichnet wird. Die Luftführungsvorrichtung 1 weist darüber hinaus ein weiteres Luftführungselement 6 auf, welches im Folgenden als ein zweites bzw. inneres Luftführungselement 6 bezeichnet wird. Das zweite bzw. innere Luftführungselement 6 ist erstmals in Fig. 2 dargestellt.

Obwohl in der folgenden Beschreibung lediglich auf eines der Beispiele der Luftführungsvorrichtung 1 eingegangen wird, bei welchem die Luftführungselemente 5, 6 separat voneinander ausgebildet sind, ist zu verstehen, dass die Luftführungselemente 5, 6 in alternativer Ausgestaltung der Luftführungsvorrichtung 1 miteinander einstückig ausgebildet sind.

Im vorliegenden Beispiel handelt es sich bei dem Außenhautelement 4 um ein Verkleidungselement des Kraftfahrzeugs 2, welches mit dem Außenhautbauteil 3 ausgerüstet ist. Mittels des Verkleidungselements bzw. mittels des Außenhautbauteils 3 ist im vorliegenden Beispiel eine Stoßfangreinrichtung (nicht dargestellt) des Kraftfahrzeugs 2 gegen eine Umgebung des Kraftfahrzeugs 2 verkleidet. Das Außenhautelement 4 des Außenhautbauteils 3 weist - wie in Fig. 1 zu erkennen ist - eine Luftdurchströmungsöffnung 7 auf, bei welcher es sich insbesondere um eine Lufteinlassöffnung handelt. Des Weiteren weist das Außenhautelement 4 einen Radlauf 8 auf, zum Beispiel einen vorderen Radlauf des Kraftfahrzeugs 2 oder einen hinteren Radlauf des Kraftfahrzeugs 2. In den Figuren ist der Radlauf 8 als ein vorderer Radlauf des Kraftfahrzeugs 2 dargestellt. Der Radlauf 8 des Kraftfahrzeugs 2 ist Teil eines Radhauses des Kraftfahrzeugs 2, in welchem ein jeweiliges Rad des Kraftfahrzeugs 2 angeordnet ist. Bei dem Kraftfahrzeug 2 handelt es sich vorliegend um einen Personenkraftwagen.

Die beiden Luftführungselemente 5, 6 der Luftführungsvorrichtung 1 sind separat voneinander ausgebildet. Das bedeutet, dass zum Montieren der Luftführungsvorrichtung 1 an dem Außenhautelement 4 vorgesehen ist, dass zunächst das erste Luftführungselement 5 und das Außenhautelement 4 aneinander fixiert werden. Hierzu weist die Luftführungsvorrichtung 1 an dem ersten Luftführungselement 5 ein (erstes) Befestigungselement 9 auf, wobei das Außenhautelement 4 seinerseits ein erstes Befestigungselement 10 umfasst. Die beiden ersten Befestigungselemente 9, 10 bilden miteinander eine Befestigungseinrichtung 11 des Außenhautbauteils 3. Für das Außenhautbauteil 3 bedeutet das, dass, wenn die beiden ersten Befestigungselemente 9, 10 ineinander eingreifen, das erste Luftführungselement 5 der Luftführungsvorrichtung 1 an dem Außenhautelement 4 fixiert ist. Hierbei bleibt zwischen dem ersten Luftführungselement 5 und dem Außenhautelement 4 ein Stoffschluss aus. Das bedeutet, dass das erste Befestigungselement 9 des ersten Luftführungselements 5 dazu ausgebildet ist, mit dem ersten Befestigungselement 10 des Außenhautelements 4 einen Kraftschluss und/oder einen Formschluss - nicht aber einen Stoffschluss - einzugehen.

Die Luftführungsvorrichtung 1 weist des Weiteren eine Verbindungseinrichtung 12 auf, welche an dem ersten Luftführungselement 5 ein erstes Verbindungselement 13 und an dem zweiten Luftführungselement 6 ein zweites Verbindungselement 14 umfasst. Das zweite Verbindungselement 14 des zweiten Luftführungselements 6 ist erstmals in Fig. 2 dargestellt. Die beiden Verbindungselemente 13, 14 korrespondieren miteinander, sodass mittels der Verbindungselemente 13, 14 die Luftführungselemente 5, 6 aneinander fixierbar bzw. fixiert sind, wodurch zwischen den Luftführungselementen 5, 6 ein von Luft durchströmbarer Luftführungskanal 15 gebildet wird oder ist. Beim Herstellen des Außenhautbauteils 3 wird der Luftführungskanal 15 hergestellt, indem die beiden Luftführungselemente 5, 6 mittels der Verbindungseinrichtung 12 aneinander befestigt bzw. fixiert werden. Hierbei unterbleibt ein stoffschlüssiges Verbinden der Luftführungselemente 5, 6. Mit anderen Worten werden die beiden Luftführungselemente 5, 6 zum Herstellen der Luftführungsvorrichtung 1 bzw. zum Herstellen des Luftführungskanals 15 kraft- und/oder formschlüssig miteinander verbunden - nicht jedoch stoffschlüssig.

Fig. 2 zeigt in perspektivischer Ansicht das mit dem ersten Luftführungselement 5 verbundene, zweite Luftführungselement 6, die miteinander die Luftführungsvorrichtung 1 bzw. den Luftführungskanal 15 bilden. In einer Zusammenschau der Fig. 2 mit der Fig. 1 wird besonders deutlich, dass der Luftführungskanal 15 sich direkt an die Luftdurchströmungsöffnung 7 anschließt. Das bedeutet, dass im Betrieb der Luftführungsvorrichtung 1, das heißt in einem Fahrbetrieb des Kraftfahrzeugs 2, ein aus der Umgebung des Kraftfahrzeugs 2 durch die Luftdurchströmungsöffnung 7 hindurchströmender Luftmassenstrom durch den Luftführungskanal 15, das heißt durch die Luftführungsvorrichtung 1, hindurchströmt. Denn eine Einströmöffnung 16 der Luftführungsvorrichtung 1 und die Luftdurchströmungsöffnung 7 des Außenhautelements 4 fallen in Einbaulage der Luftführungsvorrichtung 1, das heißt bei fertig montiertem Außenhautbauteil 3, zusammen.

Eine Ausströmöffnung 17 der Luftführungsvorrichtung 1 bzw. des Luftführungskanals 15 ist in Einbaulage der Luftführungsvorrichtung 1 - wie in Fig. 2 zu erkennen ist - am Radlauf 8 angeordnet, wodurch dem Radhaus der Luftmassenstrom zuleitbar ist, wenn das Kraftfahrzeug 2 in Fahrbetrieb betrieben wird, das heißt fährt. Denn die Einströmöffnung 16 und die Ausströmöffnung 17 sind miteinander mittels des Luftführungskanals 15 fluidisch verbunden, sodass Luft, welche durch die Luftdurchströmungsöffnung 7, durch die Einströmöffnung 16 und durch den Luftführungskanal 15 hindurchströmt, durch die Ausströmöffnung 17 hindurch die Luftführungsvorrichtung 1 verlässt und dabei am Radlauf 8 in das Radhaus einströmt. Hierdurch ist beispielsweise eine effiziente Möglichkeit geschaffen, in dem Radhaus des Kraftfahrzeugs 2 angeordnete Elemente des Kraftfahrzeugs 2, etwa Radlagerelemente des Kraftfahrzeugs 2, Reibelemente einer Reibbremsanlage des Kraftfahrzeugs 2 etc., besonders effizient mit einem Luftmassenstrom, insbesondere zur Kühlung der Radlagerelemente und/oder Reibbremselemente, zu beströmen.

Im vorliegenden Beispiel - und wie in Fig. 2 dargestellt - weist die Luftführungsvorrichtung 1 an dem zweiten Luftführungselement 6 ein weiteres (zweites) Befestigungselement 18 auf. Darüber hinaus weist das Außenhautbauteil 3, insbesondere das Außenhautelement 4, seinerseits ein weiteres (zweites) Befestigungselement 19 auf. Die beiden zweiten Befestigungselemente 18, 19 korrespondieren miteinander, sodass die Luftführungsvorrichtung 1 über das zweite Luftführungselement 6 mittels des weiteren Befestigungselements 18 an dem Außenhautelement 4 des Kraftfahrzeugs 2 fixierbar ist. Im vorliegenden Beispiel weist die Befestigungseinrichtung 11 des Außenhautbauteils 3 sowohl die ersten Befestigungselemente 9, 10 als auch die zweiten Befestigungselemente 18, 19 auf. Das bedeutet, dass bei dem Außenhautbauteil 3 mittels der Befestigungseinrichtung 11, insbesondere mittels der zweiten Befestigungselemente 18, 19, das Außenhautelement 4 und das zweite Luftführungselement 6 formschlüssig aneinander fixiert sind. Denn die beiden zweiten Befestigungselemente 18, 19 sind dazu ausgebildet, zwischen dem Außenhautelement 4 und dem zweiten Luftführungselement 6 einen Formschluss und/oder einen Kraftschluss - nicht aber einen Stoffschluss - zu vermitteln. Wird die Luftführungsvorrichtung 1 separat von dem Außenhautelement 4 betrachtet, bedeutet das also, dass das zweite Luftführungselement 6 mittels des weiteren bzw. zweiten Befestigungselements 18 unter Ausbleiben eines Stoffschlusses an dem Außenhautelement 4 fixierbar ist.

In der Zusammenschau der beiden Fig. 1 und 2 ist ferner zu erkennen, dass das Außenhautbauteil 3 im vorliegenden Beispiel mehr als eine Befestigungseinrichtung 11 aufweist. Vorliegend und lediglich beispielhaft weist das Außenhautbeil 3 vier Befestigungseinrichtungen 11 auf. Hierdurch ergibt sich ein besonders zuverlässiger Sitz der Luftführungsvorrichtung 1 an dem Außenhautelement 4.

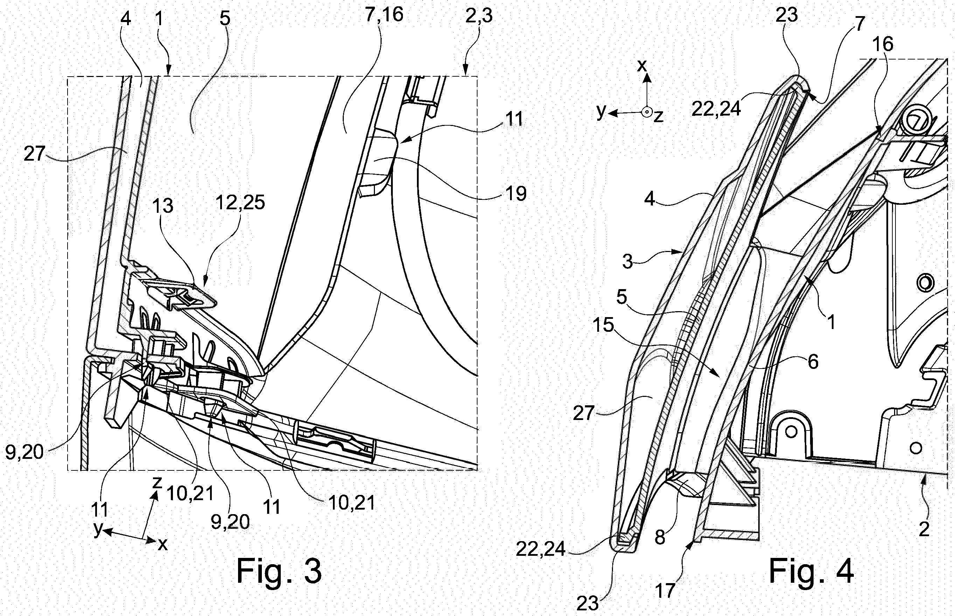

Fig. 3 zeigt eine perspektivische und geschnittene Ansicht des ersten Luftführungselements 5, welches ein Rastelement 20 aufweist. Hierbei ist die Schnittebene die Y-Z-Ebene (vgl. Koordinatensysteme in den Figuren). Vorliegend ist das jeweilige an dem ersten Luftführungselement 5 angeordnete Befestigungselement 9 als das jeweilige Rastelement 20 ausgebildet, wobei es sich bei dem Rastelement 20 insbesondere um einen Rastkeil handelt. Hierbei korrespondiert das Rastelement 20 bzw. der Rastkeil mit einer Rastelementaufnahme 21 des Außenhautelements 4. Das bedeutet, dass das erste Befestigungselement 10 des Außenhautelements 4 als die Rastelementaufnahme 21 ausgebildet ist. Folglich gilt für das Außenhautbauteil 3, bei welchem das Außenhautelement 4 und die Luftführungsvorrichtung 1 mittels der Befestigungseinrichtung(en) 11 aneinander fixiert sind, dass in Einbaulage der Luftführungsvorrichtung 1 zwischen der Luftführungsvorrichtung 1 und dem Außenhautelement 4 mittels des/der Rastelement(s/e) 20 und der Rastelementaufnahme(n) 21 eine Rastverbindung oder mehr Rastverbindungen ausgebildet ist/sind.

Fig. 4 zeigt eine perspektivische und geschnittene Ansicht der Luftführungsvorrichtung 1 bzw. der Luftführungselemente 5, 6, wobei ein Halteelement 22 des ersten Luftführungselements 5 in eine - beispielsweise als Haltenut ausgebildete - Halteelementaufnahme 23 des Außenhautelements 4 formschlüssig eingreift. Hierzu ist an dem ersten Luftführungselement 5 beispielsweise eine Randlasche 24 ausgebildet, welche beispielsweise das Halteelement 22 des ersten Luftführungselements 5 bildet. Die Befestigungseinrichtung 11 des Außenhautbauteils 3, insbesondere eines oder mehr der ersten Befestigungselemente 9, umfasst die Randlasche 24 als das Halteelement 22. Hierbei ist die Randlasche 24 bzw. das Halteelement 22 dazu konfiguriert, in die mit der Randlasche 24 bzw. mit dem Halteelement 22 korrespondierende Halteelementaufnahme 23 des Außenhautelements 4 formschlüssig einzugreifen. Mit anderen Worten wird in Einbaulage der Luftführungsvorrichtung 1, das heißt, wenn die Luftführungsvorrichtung 1 und das Außenhautelement 4 aneinander bestimmungsgemäß befestigt sind, mittels des Halteelements 22 und der Halteelementaufnahme 23 ein (weiterer) Formschluss zwischen der Luftführungsvorrichtung 1 und dem Außenhautelement 4 gebildet. Beim vorliegenden Außenhautbauteil 3 weist das Außenhautelement 4 mehr als eine Halteelementaufnahme 23, beispielsweise zwei Halteelementaufnahmen 23, auf (siehe Fig. 1 und 2). Weiter weist das Außenhautbauteil 3 mehr als ein Halteelement 22, vorliegend zwei Halteelemente 22, auf, welche ebenfalls in den Fig. 1 und 2 dargestellt sind.

Wie des Weiteren aus den Fig. 1, 2 und 3 hervorgeht, weist die Verbindungseinrichtung 12, mittels derer die Luftführungselemente 5, 6 bei der Luftführungsvorrichtung 1 bzw. bei dem Außenhautbauteil 3 miteinander verbunden sind, an den Luftführungselementen 5, 6 ein jeweiliges Formschlusselement auf, sodass die Verbindungseinrichtung 12 der Luftführungsvorrichtung 1 vorliegend als eine Formschlusseinrichtung 25 ausgebildet ist und/oder diese umfasst.

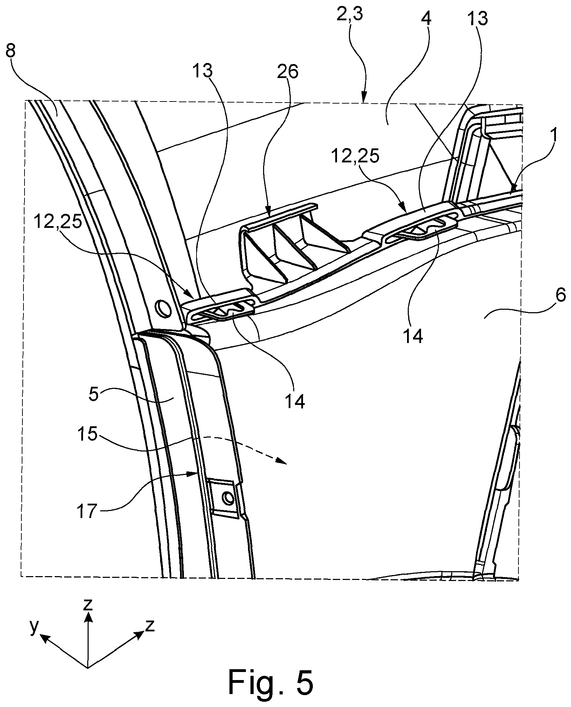

Fig. 5 zeigt in perspektivischer Ansicht ein an der Luftführungsvorrichtung 1, insbesondere an dem zweiten bzw. inneren Luftführungselement 6, angeordnetes Stützelement 26. Das Stützelement 26 und das Außenhautelement 4 berühren sich direkt bzw. grenzen direkt aneinander an, sofern die Luftführungsvorrichtung 1 vollständig in die Einbaulage montiert ist, das heißt wenn das Außenhautelement 4 und das erste Luftführungselement 5 und infolgedessen die Luftführungsvorrichtung 1 mittels der Befestigungseinrichtung 11 oder mittels der Befestigungseinrichtungen 11 aneinander formschlüssig fixiert sind. Hierdurch ergibt sich ein besonders positionsstabiler Sitz der Luftführungsvorrichtung 1 in Bezug zu dem Außenhautelement 4, wobei die Luftführungsvorrichtung 1 über einen Abstand 27 (siehe Fig. 3) von dem Außenhautelement 4 beabstandet gehalten ist. Da die Luftführungsvorrichtung 1 mittels des Stützelements 26 an dem Außenhautelement 4 abgestützt ist, ist einem unerwünschten Vibrieren der Luftführungsvorrichtung 1 in effizienter Weise entgegengewirkt. Hieraus resultiert für das Kraftfahrzeug 2, das mit dem die Luftführungsvorrichtung 1 aufweisenden Außenhautbauteil 3 ausgerüstet ist, ein besonders vorteilhaftes NVH-Verhalten (NVH: Noise, Vibration, Harshness - Geräusch, Vibration, Rauheit).

Bei dem Verfahren zum Herstellen des Außenhautbauteils 3 werden, nachdem sowohl das Außenhautelement 4 und das erste Luftführungselement 5 bereitgestellt wurden, das Außenhautelement 4 und das erste Luftführungselement 5 aneinander befestigt, indem - unter Ausbleiben eines stoffschlüssigen Verbindens - die beiden ersten Befestigungselemente 9, 10 und/oder das jeweilige Halteelement 22 mit der jeweiligen Halteelementaufnahme 23 miteinander in Zusammenwirkung gebracht. Hierbei werden das Außenhautelement 4 und das erste Luftführungselement 5 entlang einer vorgegebenen bzw. vorgebbaren Montagerichtung translatorisch relativ zueinander bewegt, um den jeweiligen Formschluss zwischen dem jeweiligen Halteelement 22 und der jeweiligen Halteelementaufnahme 23 bzw. zwischen den ersten Befestigungselementen 9, 10 auszubilden. Hierbei ist vorgesehen, dass die Montagerichtung parallel zur Z-Achse des Kraftfahrzeugs 2, insbesondere des Außenhautbauteils 3 bzw. des Außenhautelements 4, verläuft oder mit dieser zusammenfällt. Beim translatorischen Bewegen des Außenhautelements 4 in Bezug zu dem ersten Luftführungselement 5 und/oder beim Bewegen des ersten Luftführungselements 5 in Bezug zu dem Außenhautelement 4 gleiten das jeweilige Halteelement 22 und die jeweilige Halteelementaufnahme 23 und/oder die ersten Befestigungselemente 9, 10 so lang oder so weit aneinander ab, bis zwischen dem jeweiligen Halteelement 22 und der jeweiligen Halteelementaufnahme 23 bzw. zwischen den ersten Befestigungselementen 9, 10 ein jeweiliger Formschluss ausgebildet wird oder ist. Sind die entsprechenden Formschlüsse zwischen dem Außenhautelement 4 und dem ersten Luftführungselement 5 ausgebildet, gilt das erste Luftführungselement 5 und infolgedessen die Luftführungsvorrichtung 1 in Bezug zu dem Außenhautelement 4 als in Einbaulage montiert. Hierbei wird während des gesamten Montierens der Luftführungsvorrichtung 1 auf ein stoffschlüssiges Verbinden von Material zwischen dem Außenhautelement 4 und der Luftführungsvorrichtung 1 verzichtet.

Insgesamt zeigt die Erfindung eine Möglichkeit auf, die Luftführungsvorrichtung 1 sicher an dem Außenhautelement 4 des Kraftfahrzeugs 2 zu befestigen, ohne eine Qualität des Außenhautelements 4 und infolgedessen eine Qualität des Außenhautbauteils 3 in unerwünschter Weise zu beeinträchtigen. Denn eine Gefahr, dass aufgrund einer stoffschlüssigen Verbindung zwischen dem Außenhautelement 4 und der Luftführungsvorrichtung 1 sich eine unerwünschte Oberflächenabzeichnung bzw. unerwünschte Markierung an einer Sichtseite des Außenhautbauteils 3, insbesondere des Außenhautelements 4, abzeichnet, ist vermieden, indem für das Befestigen der Luftführungsvorrichtung 1 und des Außenhautelements 4 aneinander vollständig auf einen Stoffschluss verzichtet wird.

### Bezugszeichenliste

- 1: Luftführungsvorrichtung
- 2: Kraftfahrzeug
- 3: Außenhautbauteil
- 4: Außenhautelement
- 5: (erstes) Luftführungselement
- 6: (zweites) Luftführungselement
- 7: Luftdurchströmungsöffnung
- 8: Radlauf
- 9: (erstes) Befestigungselement
- 10: (erstes) Befestigungselement
- 11: Befestigungseinrichtung
- 12: Verbindungseinrichtung
- 13: (erstes) Verbindungselement
- 14: (zweites) Verbindungselement
- 15: Luftführungskanal
- 16: Einströmöffnung
- 17: Ausströmöffnung
- 18: (zweites) Befestigungselement
- 19: (zweites) Befestigungselement
- 20: Rastelement
- 21: Rastelementaufnahme
- 22: Halteelement
- 23: Halteelementaufnahme
- 24: Randlasche
- 25: Formschlusseinrichtung
- 26: Stützelement
- 27: Abstand

## Patentansprüche

1. Außenhautbauteil für ein Kraftfahrzeug mit einem Außenhautelement (4) und einer Luftführungsvorrichtung (1) eines Kraftfahrzeug (2), mit
- einem ersten Luftführungselement (5) und einem zweiten Luftführungselement (6), welche miteinander einen zwischen den Luftführungselementen (5, 6) ausgebildeten und von Luft durchströmbaren Luftführungskanal (15) begrenzen; und
- einem Befestigungselement (9), das an dem ersten Luftführungselement (5) angeordnet ist und mit einem ersten Befestigungselement (10) eines Außenhautelements (4) des Kraftfahrzeugs (2) korrespondiert, sodass mittels des Befestigungselements (9) der Luftführungsvorrichtung (1) das erste Luftführungselement (5) und infolgedessen die Luftführungsvorrichtung (1) unter Ausbleiben eines Stoffschlusses an dem Außenhautelement (4) fixiert ist,
sowie mit einer Befestigungseinrichtung (11), wobei das Außenhautelement (4) und die Luftführungsvorrichtung (1) aneinander fixiert sind, indem ein erstes Luftführungselement (5) der Luftführungsvorrichtung (1) und das Außenhautelement (4) mittels der Befestigungseinrichtung (11) und Ausbleiben eines Stoffschlusses aneinander fixiert sind,
**dadurch gekennzeichnet, dass**
an dem ersten Luftführungselement (5) eine Randlasche (24) ausgebildet ist, und
dass an dem ersten Luftführungselement (5) angeordnete Befestigungselement (9) die Randlasche (24) als ein Halteelement (22) aufweist, wobei die Randlasche (24) dazu konfiguriert ist, in eine korrespondierende Halteelementaufnahme (23) des Kraftfahrzeugs (2), insbesondere des Außenhautelements, formschlüssig einzugreifen, wobei das Halteelement (22) und die Halteelementaufnahme (23) dazu ausgebildet sind, während eines Montierens bzw. Befestigens der Lüftungsvorrichtung an dem Außenhautelement (4) entlang einer Montagerichtung aneinander abzugleiten und insoweit das Halteelement (22) und die Halteelementaufnahme (23) als eine Montagehilfseinrichtung dienen, indem zum Montieren der Lüftungsvorrichtung an dem Außenhautelement (4) die Lüftungsvorrichtung in Bezug zur Montagerichtung translatorisch verschiebbar gehalten ist, wohingegen die Lüftungsvorrichtung aufgrund des Halteelements (22) bzw. aufgrund der Halteelementaufnahme (23) quer zur Montagerichtung, insbesondere quer zur Z-Achse des Kraftfahrzeugs, wenn die Montagerichtung in Bezug zu dem Kraftfahrzeug zumindest im Wesentlichen parallel zu einer Hochachse des Kraftfahrzeugs verläuft oder mit dieser zusammenfällt, gegen ein Ausweichen von der Montagerichtung gesperrt ist.

2. Außenhautbauteil nach Anspruch 1,
**dadurch gekennzeichnet, dass**
an dem zweiten Luftführungselement (6) ein weiteres Befestigungselement (18) angeordnet ist und mit einem weiteren Befestigungselement (19) des Außenhautelements (4) korrespondiert, sodass mittels des weiteren Befestigungselements (18) das zweite Luftführungselement (6) unter Ausbleiben eines Stoffschlusses an dem Außenhautelement (4) des Kraftfahrzeugs (2) fixierbar ist.

3. Außenhautbauteil nach Anspruch 1 oder 2,
**dadurch gekennzeichnet, dass**
das an dem ersten Luftführungselement (5) angeordnete Befestigungselement (9) ein Rastelement (20) aufweist, welches mit einer Rastelementaufnahme (21) des Befestigungselements (10) des Kraftfahrzeugs (2) korrespondiert.

4. Außenhautbauteil (3) nach einem der vorstehenden Ansprüche,
**dadurch gekennzeichnet, dass**
die Halteelementaufnahme eine Haltenut ist.

5. Außenhautbauteil nach einem der vorhergehenden Ansprüche,
**dadurch gekennzeichnet, dass**
die Verbindungseinrichtung (12) an den Luftführungselementen (5, 6) ein jeweiliges Formschlusselement (13, 14) umfasst und infolgedessen die Verbindungseinrichtung (12) eine Formschlusseinrichtung (25) aufweist.

6. Außenhautbauteil (3) nach einem der vorstehenden Ansprüche,
**dadurch gekennzeichnet, dass**
die Befestigungseinrichtung (11) eine an dem Außenhautelement (4) angeordnete Rastelementaufnahme (21) sowie ein damit korrespondierendes und an dem ersten Luftführungselement (5) angeordnetes Rastelement (21) umfasst, sodass mittels der Befestigungseinrichtung (11) das Außenhautelement (4) und das erste Luftführungselement (5) formschlüssig aneinander fixiert sind.

7. Außenhautbauteil (3) nach einem der vorstehenden Ansprüche,
**dadurch gekennzeichnet, dass**
die Befestigungseinrichtung (11) an dem Außenhautelement (4) ein weiteres Befestigungselement (19) sowie ein damit korrespondierendes und an dem zweiten Luftführungselement (6) angeordnetes, weiteres Befestigungselement (18) umfasst, sodass mittels der Befestigungseinrichtung (11) das Außenhautelement (4) und das zweite Luftführungselement (6) formschlüssig aneinander fixiert sind.

8. Außenhautbauteil (3) nach einem der vorstehenden Ansprüche,
**dadurch gekennzeichnet, dass**
das Außenhautelement (4) als ein Verkleidungselement des Kraftfahrzeugs (2) ausgebildet ist.

## Claims

1. An external skin component for a motor vehicle with an external skin element (4) and an air-guiding device (1) of a motor vehicle (2), with
- a first air-guiding element (5) and a second air-guiding element (6), which together delimit an air-guiding duct (15) which is formed between the air-guiding elements (5, 6) and through which air can flow; and
- a fastening element (9), which is arranged on the first air-guiding element (5) and corresponds with a first fastening element (10) of an external skin element (4) of the motor vehicle (2), so that the first air-guiding element (5) and consequently the air-guiding device (1) is fixed to the external skin element (4) by the fastening element (4) of the air-guiding device (1) in the absence of an integrally bonded connection,
and with a fastening means (11), wherein the external skin element (4) and the air-guiding device (1) are fixed to one another in that a first air-guiding element (5) of the air-guiding device (1) and the external skin element (4) are fixed to one another by the fastening means (11) and in the absence of an integrally bonded connection,
**characterised in that**
an edge tab (24) is formed on the first air-guiding element (5), and the fastening element (9) arranged on the first air-guiding element (5) comprises the edge tab (24) as a holding element (22), wherein the edge tab (24) is configured to engage form-fittingly in a corresponding holding element receptacle (23) of the motor vehicle (2), in particular of the external skin element, wherein the holding element (22) and the holding element receptacle (23) are configured to slide against one another in a mounting direction during a mounting or fastening of the ventilation device to the external skin element (4) and in this respect the holding element (22) and the holding element receptacle (23) serve as a mounting aid means **in that**, to mount the ventilation device on the external skin element (4), the ventilation device is held displaceably in translation in relation to the mounting direction, whereas the ventilation device, on account of the holding element (22) or on account of the holding element receptacle (23), transversely to the mounting direction, in particular transversely to the Z-axis of the motor vehicle, is blocked against deviating from the mounting direction when the mounting direction, in relation to the motor vehicle, runs at least substantially parallel to a vertical axis of the motor vehicle or coincides therewith.

2. The external skin component according to claim 1,
**characterised in that**
a further fastening element (18) is arranged on the second air-guiding element (6) and corresponds with a further fastening element (19) of the external skin element (4), so that the second air-guiding element (6) is fixable to the external skin element (4) of the motor vehicle (2) by the further fastening element (18) in the absence of an integrally bonded connection.

3. The external skin component according to claim 1 or 2,
**characterised in that**
the fastening element (9) arranged on the first air-guiding element (5) has a detent element (20), which corresponds with a detent element receptacle (21) of the fastening element (10) of the motor vehicle (2).

4. The external skin component (3) according to any one of the preceding claims,
**characterised in that**
the retaining element receptacle is a retaining groove.

5. The external skin component according to any one of the preceding claims,
**characterised in that**
the connection means (12) at the air-guiding element (5, 6) comprises a respective form-fit element (13, 14) and consequently the connection meanse (12) has a form-fit means (25).

6. The external skin component (3) according to any one of the preceding claims,
**characterised in that**
the fastening means (11) comprises a detent element receptacle (21) arranged on the external skin element (4) and a detent element (21) which corresponds therewith and which is arranged on the first air-guiding element (5), so that the external skin element (4) and the first air-guiding element (5) are fixed to one another form-fittingly by the fastening means (11).

7. The external skin component (3) according to any one of the preceding claims,
**characterised in that**
the fastening means (11) at the external skin element (4) comprises a further fastening element (19) and a further fastening element (18) which corresponds therewith and which is arranged on the second air-guiding element (6), so that the external skin element (4) and the second air-guiding element (6) are fixed to one another form-fittingly by the fastening means (11).

8. The external skin component (3) according to any one of the preceding claims,
**characterised in that**
the external skin element (4) is formed as a lining element of the motor vehicle (2).

## Revendications

1. Composant de revêtement extérieur pour un véhicule automobile avec un élément de revêtement extérieur (4) et un dispositif de guidage d'air (1) d'un véhicule automobile (2), avec
- un premier élément de guidage d'air (5) et un deuxième élément de guidage d'air (6), qui délimitent ensemble un canal de guidage d'air (15) réalisé entre les éléments de guidage d'air (5, 6) et pouvant être traversé par de l'air ; et
- un élément de fixation (9) qui est agencé sur le premier élément de guidage d'air (5) et qui correspond à un premier élément de fixation (10) d'un élément de revêtement extérieur (4) du véhicule automobile (2), de telle sorte qu'au moyen de l'élément de fixation (9) du dispositif de guidage d'air (1), le premier élément de guidage d'air (5) et par conséquent le dispositif de guidage d'air (1) sont fixés sur l'élément de revêtement extérieur (4) en l'absence d'une liaison de matière,
ainsi qu'avec un appareil de fixation (11), l'élément de revêtement extérieur (4) et le dispositif de guidage d'air (1) étant fixés l'un à l'autre par le fait qu'un premier élément de guidage d'air (5) du dispositif de guidage d'air (1) et l'élément de revêtement extérieur (4) sont fixés l'un à l'autre au moyen de l'appareil de fixation (11) et en l'absence d'une liaison de matière,
**caractérisé en ce que**
une patte de bordure (24) est réalisée sur le premier élément de guidage d'air (5), et **en ce que** l'élément de fixation (9) agencé sur le premier élément de guidage d'air (5) présente la patte de bordure (24) en tant qu'élément de retenue (22), la patte de bordure (24) étant configurée pour s'engager par complémentarité de forme dans un logement d'élément de retenue (23) correspondant du véhicule automobile (2), notamment de l'élément de revêtement extérieur, l'élément de retenue (22) et le logement d'élément de retenue (23) étant réalisés pour glisser l'un contre l'autre le long d'une direction de montage pendant un montage ou une fixation du dispositif de ventilation sur l'élément de revêtement extérieur (4), et l'élément de retenue (22) et le logement d'élément de retenue (23) servant d'appareil d'aide au montage par le fait que pour le montage du dispositif de ventilation sur l'élément de revêtement extérieur (4), le dispositif de ventilation est maintenu de manière à pouvoir être déplacé en translation par rapport à la direction de montage, tandis que le dispositif de ventilation est bloqué contre une déviation de la direction de montage en raison de l'élément de retenue (22) ou en raison du logement d'élément de retenue (23) transversalement à la direction de montage, notamment transversalement à l'axe Z du véhicule automobile, lorsque la direction de montage est au moins essentiellement parallèle à un axe vertical du véhicule automobile ou coïncide avec celui-ci par rapport au véhicule automobile.

2. Composant de revêtement extérieur selon la revendication 1,
**caractérisé en ce que**
un autre élément de fixation (18) est agencé sur le deuxième élément de guidage d'air (6) et correspond à un autre élément de fixation (19) de l'élément de revêtement extérieur (4), de telle sorte qu'au moyen de l'autre élément de fixation (18), le deuxième élément de guidage d'air (6) peut être fixé sur l'élément de revêtement extérieur (4) du véhicule automobile (2) en l'absence d'une liaison de matière.

3. Composant de revêtement extérieur selon la revendication 1 ou 2,
**caractérisé en ce que**
l'élément de fixation (9) agencé sur le premier élément de guidage d'air (5) présente un élément d'encliquetage (20) qui correspond à un logement d'élément d'encliquetage (21) de l'élément de fixation (10) du véhicule automobile (2).

4. Composant de revêtement extérieur (3) selon l'une quelconque des revendications précédentes,
**caractérisé en ce que**
le logement d'élément de retenue est une rainure de retenue.

5. Composant de revêtement extérieur selon l'une quelconque des revendications précédentes,
**caractérisé en ce que**
l'appareil de liaison (12) comprend, au niveau des éléments de guidage d'air (5, 6), un élément de complémentarité de forme (13, 14) respectif et, par conséquent, l'appareil de liaison (12) présente un appareil de complémentarité de forme (25).

6. Composant de revêtement extérieur (3) selon l'une quelconque des revendications précédentes,
**caractérisé en ce que**
l'appareil de fixation (11) comprend un logement d'élément d'encliquetage (21) agencé sur l'élément de revêtement extérieur (4) ainsi qu'un élément d'encliquetage (21) correspondant et agencé sur le premier élément de guidage d'air (5), de telle sorte qu'au moyen de l'appareil de fixation (11), l'élément de revêtement extérieur (4) et le premier élément de guidage d'air (5) sont fixés l'un à l'autre par complémentarité de forme.

7. Composant de revêtement extérieur (3) selon l'une quelconque des revendications précédentes,
**caractérisé en ce que**
l'appareil de fixation (11) comprend un autre élément de fixation (19) sur l'élément de revêtement extérieur (4) ainsi qu'un autre élément de fixation (18) correspondant et agencé sur le deuxième élément de guidage d'air (6), de telle sorte qu'au moyen de l'appareil de fixation (11), l'élément de revêtement extérieur (4) et le deuxième élément de guidage d'air (6) sont fixés l'un à l'autre par complémentarité de forme.

8. Composant de revêtement extérieur (3) selon l'une quelconque des revendications précédentes,
**caractérisé en ce que**
l'élément de revêtement extérieur (4) est réalisé sous la forme d'un élément d'habillage du véhicule automobile (2).
